# EUROPEAN PATENT APPLICATION

(11) **EP 1 146 764 A2**
(43) Date of publication of application: **17.10.2001**
(21) Application number: 01303123.2
(22) Date of filing: 02.04.2001
(51) Int. Cl.: H04Q 7/38

(54) **Multiple wireless units with same telephone number**

(30) Priority: 13.04.2000 US 548455
(71) Applicant: LUCENT TECHNOLOGIES INC., Murray Hill, New Jersey 07974-0636 (US)
(72) Inventor: Duerk, Paul B., Kenvil, NJ 07847 (US)
(74) Representative: Watts, Christopher Malcolm Kelway, Dr.

(57) **Abstract**

A technique allowing more than one wireless unit (e.g., a plurality of mobile phones) to share a single telephone (i.e., directory) number is disclosed. One telephone number is assigned to more than one wireless unit, where each wireless unit has a different electronic serial number. The mobile switching center (MSC) tracks the current location of each wireless unit and stores this information in a location registration database. Each time an active wireless unit moves out of a cell (or sector) and enters a new cell (or sector), it registers with the MSC which updates its location registration database with the current location of the wireless unit. When the MSC receives an incoming call for a telephone number shared by multiple wireless units, the MSC accesses the location registration database and forwards the incoming call to all the wireless units assigned to the shared telephone number. When one of the wireless units answers, the MSC connects the call between the calling party and the wireless unit. At the same time, the MSC transmits a signal to the remaining wireless units assigned to that telephone number indicating that another wireless unit is conducting an active call. One or more remaining wireless units (i.e., other than the one that answered the call) may join the call-in-progress. Each time a new wireless unit joins the call-in-progress, the wireless units already participating in the call are notified by the MSC. Similarly, when one of the wireless units originates an outgoing call, the MSC connects the caller to the called party and transmits a signal to the remaining wireless units assigned to the shared telephone number indicating that one of the wireless units is conducting an active call. The other wireless units have the option to join the call-in-progress, and any time a new wireless unit joins the call-in-progress, the wireless units already participating in the call are notified.

## Description

### BACKGROUND OF THE INVENTION

### Field of the Invention

The present invention relates to wireless telecommunication networks.

### Description of the Related Art

The cost of telephone sets has decreased to such a degree that many -- perhaps most -- homes are now equipped with several of them. New homes are even pre-wired for telephones in every room, and older homes are now being equipped to strategically add telephones at various locations. All of this effort is aimed at improving convenience so that telephones can be within easy reach -- no matter where individuals are located within the home, whether the basement or the bedroom. The proliferation of telephones within the home has been encouraged by the fact that they all can share the same wire-pair.

Such an arrangement offers a cost-effective solution where multiple telephones operate from a single telephone line and share one telephone number. Furthermore, more than one person can answer an incoming call or join an outgoing call. However, such capabilities are available only with land-line networks. The capability of sharing one telephone number by more than one telephone is not known in wireless networks.

### SUMMARY OF THE INVENTION

The present invention is directed to a technique allowing more than one wireless unit (e.g., a plurality of mobile phones) to share a single telephone (i.e., directory) number. In accordance with the principles of the present invention, one telephone number is assigned to more than one wireless unit, where each wireless unit has a different electronic serial number. A mobile switching center (MSC) of the wireless network tracks the current location of each wireless unit and stores this information in a location registration database. Each time an active wireless unit moves out of one cell (or sector) and enters a new cell (or sector), it registers with the MSC which updates its location registration database with the current location of the wireless unit.

When the MSC receives an incoming call for a telephone number shared by multiple wireless units, the MSC accesses the location registration database and forwards the incoming call to all the wireless units assigned to the shared telephone number. When one of the wireless units answers, the MSC connects the incoming call from the calling party to that particular wireless unit. The MSC also sends a signal to the remaining wireless units assigned to that telephone number indicating that one of the wireless units is conducting an active call. This information may be provided in the form of a visual signal, e.g., a red light, or an audio signal, e.g., a beep signal. The other wireless units (i.e., other than the one that answered the call) may join the call-in-progress. In such case, the MSC preferably sends a signal to the wireless unit that actually answered the call indicating that another wireless unit has joined the call-in-progress. One or more wireless units have the option to join the call-in-progress, and any time a new wireless unit joins the call-in-progress, the MSC preferably sends a signal to the other wireless units that have already joined the call-in-progress indicating that a new wireless unit has joined the call-in-progress.

In addition, when one of the wireless units sharing the same telephone number originates an outgoing call, the caller is connected to the called party and the remaining wireless units assigned to the shared telephone number are provided with the information that one of the wireless units is conducting an active call. As in the case of incoming calls, one or more of the other wireless units have the option to join the call-in-progress, and any time a new wireless unit joins the call-in-progress, the MSC preferably sends a signal to the wireless units that have already joined the call indicating that a new wireless unit has joined the call.

In one embodiment, the present invention is a method for processing telephone calls in a wireless communications system, comprising the steps of (a) assigning a single telephone number to two or more different wireless units; (b) establishing a call between a first of the wireless units and a third party; and (c) connecting a second of the wireless units to the call between the first wireless unit and the third party.

In another embodiment, the present invention is a wireless communications system, comprising one or more mobile switching centers (MSCs) controlling one or more base stations configured to communicate with one or more wireless units, wherein a single telephone number is assigned to two or more different wireless units; an MSC establishes a call between a first of the wireless units and a third party; and the one or more MSCs connect a second of the wireless units to the call between the first wireless unit and the third party.

### BRIEF DESCRIPTION OF THE DRAWINGS

Other aspects, features, and advantages of the present invention will become more fully apparent from the following detailed description, the appended claims, and the accompanying drawings in which:
FIG. 1 illustrates a flow chart depicting different steps involved in one embodiment of the present invention wherein an incoming call is received for wireless units sharing the same telephone number;
FIG. 2 illustrates a flow chart depicting different steps involved in a process where a mobile originates an outgoing call in an environment where multiple mobiles share the same telephone number;
FIG. 3 illustrates a wireless communication system according to one embodiment of the present invention; and
FIG. 4 illustrates an exemplary case where one of the mobiles is in a roaming condition.

### DETAILED DESCRIPTION

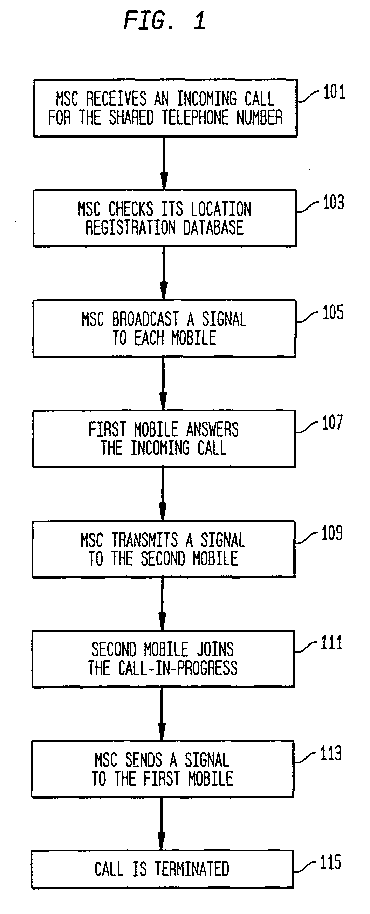

FIG. 1 illustrates a flow chart depicting different steps involved in the implementation of one embodiment of the present invention. In this embodiment, two wireless units, referred as a "first mobile" and a "second mobile" are assigned the same telephone number. The Mobile Switching Center (MSC) of the corresponding wireless network is configured to track and maintain the current locations of the first and second mobiles in a location registration database. FIG. 1 illustrates a process related to an exemplary case where an incoming call is received for the mobiles sharing the telephone number and wherein the first mobile answers the call before the second mobile.

The process of FIG. 1 starts in step 101 when an incoming call is received at the MSC for the shared telephone number. Upon the receipt of this incoming call, the MSC checks its location registration database to find the current locations of the first mobile and the second mobile (step 103), and then broadcasts a signal to each mobile indicating an incoming call (step 105). In step 107, the first mobile answers the incoming call, and the calling party and the first mobile are connected. An active call then may progress between the first mobile and the calling party. The MSC also transmits a signal to the second mobile indicating that another mobile unit sharing the same telephone number is participating in an active call (step 109). In step 111, the second mobile joins the call-in-progress, and the second mobile is bridged by the MSC to the call-in-progress between the calling party and the first mobile. Then, the second mobile may also actively participate in the call-in-progress. The MSC also sends a signal to the first mobile indicating that another mobile has joined the call (step 113). The call-in-progress continues until the participants terminate the call (step 115). The call is terminated when either (1) the calling party hangs up or (2) when both the first and second mobiles hang up. Note that, after the second mobile joins the call-in-progress, the first mobile, which originally answered the incoming call, can hang up and the second mobile will be able to continue the call with the calling party. Similarly, the second mobile can hang up and the first mobile will be able to continue the call with the calling party.

In this embodiment, the second mobile may join the call-in-progress at any time during the duration of the call-in-progress. If the second mobile was in an inactive state (turned off) when the incoming call was initially connected to the first mobile, the second mobile will preferably receive a signal indicating a call-in-progress when it is turned on, i.e., in an active status. From that point, the second mobile has an option to join the call-in-progress. The MSC performs the necessary combining / multiplexing steps so that all participants experience an uninterrupted exchange of information. Each participant may talk or listen at any time. This function is similar to conference call features.

The present invention may be practiced with the use of existing technologies. For example, the function of paging multiple mobiles having the same directory number to announce the existence of a new incoming call may be implemented by using the known Flexible Alerting (FA) feature. The FA feature is currently used in the industry for paging multiple phones having different directory numbers. In the present invention, the FA feature may be modified to page multiple phones having the same directory number based on their unique Electronic Serial Numbers (ESN). In an exemplary case, a Stand-alone Home Location Register (SHLR) is maintained by the service provider. The SHLR maintains a list of ESNs associated with one telephone number. When an incoming call is received for the directory number associated with multiple phones, the MSC initiates a "Location Request Invoke" message to the SHLR. Upon the receipt of the location request invoke message, the SHLR identifies the different ESNs associated with the telephone number and forwards this information to the MSC. Based of the ESN information, the MSC transmits paging messages to the multiple phones indicating the incoming call.

FIG. 1 only illustrates an exemplary case wherein the first mobile answers the incoming call before the second mobile. In other cases, the second mobile may answer before the first mobile. In these cases, the incoming call from the calling party is initially connected to the second mobile, and, if appropriate, the first mobile is then bridged to the call-in-progress. Of course, it may be that only a single mobile chooses to answer the incoming call. In this case, a normal connection occurs between the calling party and the mobile which answers, and there is no bridging of calls.

There may be cases when both the first mobile and the second mobile are in active status and both of the mobiles attempt to answer the incoming call at the same time. The MSC is capable of bridging both the first and second mobiles to the incoming call as long as there is some time difference, even to the extent of a few milliseconds, at the same time (i.e., less than a few milliseconds apart), the MSC will arbitrarily select one of the mobiles as the first mobile, and the other mobile will be treated as the second mobile.

The principles of the present invention are also applicable for cases where more than two mobiles share the same telephone number. In the case of more than two mobiles, the mobile who answers first will be connected to the calling party. Any of the other mobiles will then have the option to join the active call. The bridging of calls is a serial function wherein each mobile is bridged to the call-in-progress in the order it answers and whenever a new mobile joins the call, the mobiles already bridged to the call are notified.

The principles of the present invention are flexible and may be combined with different existing technologies, e.g., different types of notification signals may be transmitted from the MSC. These signals may correspond to visible notifications, e.g., a flashing light, or audible notifications, e.g., a beep. In digital technologies, these signals may also corresponding to text-based notifications, where appropriate text will appear on the user telephone indicating an active task, e.g., "active call"or "a new mobile has joined in", etc. In the case of text-based notifications, the messages may indicate the particular mobile phones that are currently participating in the call-in-progress.

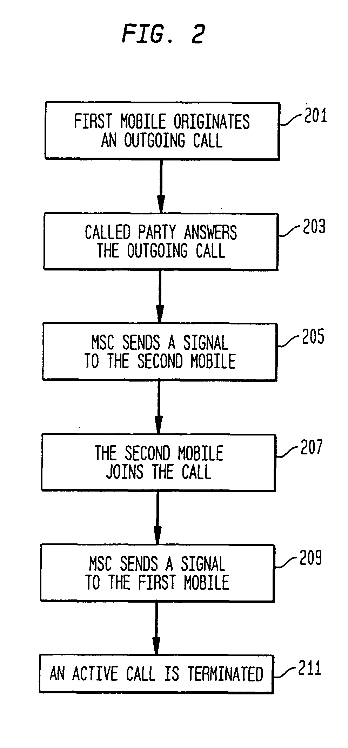

FIG. 2 illustrates a flow chart depicting different steps involved in a process where a caller mobile originates an outgoing call in an environment where multiple mobiles share the same telephone number. For exemplary purpose, FIG. 2 illustrates a case wherein the first mobile initiates an outgoing call and the second mobile joins the outgoing call later.

In step 201, the first mobile (i.e., the caller mobile) originates an outgoing call to a called party. In step 203, the called party answers the outgoing call and an active call is established between the first mobile and the called party. In step 205, based on information in its location registration database, the MSC sends the second mobile a signal indicating that another mobile is conducting an active call.

In step 207, the second mobile joins the call and the MSC performs a bridging function to connect the second mobile to the call-in-progress between the first mobile and the called party. An active call then may proceed among the first mobile, the second mobile, and the called party. In step 209, the MSC sends a signal to the first mobile indicating that another mobile has joined the call. In this case, the process ends in step 211, when the active call is terminated. The call is terminated when either (1) the called party hangs up, or (2) when the caller mobile and the second mobile hang up. Note that after the second mobile joins the call, the first mobile which originated the outgoing call, can hang up and the second mobile will be able to continue the call with the called party. Similarly, the second mobile can hang up and the first mobile will be able to continue the call with the called party.

Even though the flow chart of FIG. 2 illustrates the first mobile originating an outgoing call, the steps of 201-211 are also applicable if the second mobile assigned to the shared telephone number originates an outgoing call. In this case, the second mobile is the original caller mobile and the first mobile can subsequently join the call-in-progress.

There may be cases when both the first mobile and the second mobile are in active status and both the mobiles attempt to place outgoing calls at the same time. The MSC is capable of bridging both the mobiles as long as there is some time difference, even to the extent of a few milliseconds, between the times both mobiles attempt to make outgoing calls. The mobile which is first in time is the first mobile, and the second mobile receives a signal indicating that another mobile is conducting an active call. The second mobile may be bridged to the call-in-progress; however, the second mobile may not place another outgoing call or receive an incoming call while the first mobile is conducting an active call. In the rare case where both mobiles attempt to place outgoing calls at the same time (i.e., less than a few milliseconds apart), the MSC will select, at random, one of the mobiles as the first mobile, and the other mobile will be treated as the second mobile. random, one of the mobiles as the first mobile, and the other mobile will be treated as the second mobile.

Similarly, the principles of the present invention as described in steps 201-211 may also be used in cases where more than two mobiles are assigned to the same telephone number. The mobile who originates a call is a caller mobile and the remaining mobiles assigned to the shared telephone number are other mobiles that may join the call. When a new mobile joins the call, the MSC transmits a signal to the previously bridged mobiles indicating that a new mobile has joined the call. Once again, the bridging function is a serial function, and the mobiles are bridged in the order they join the call. Any time a new mobile is bridged to the call, the MSC transmits a signal to the previously bridged mobiles indicating that a new mobile has joined the call.

The principles of the present invention are flexible and may be implemented in conventional wireless networks. Two-way wireless communications systems that support hand-off and inbound calling are well suited for the implementation of the present invention. In these systems, the coverage areas are defined by the transmission distances from one or more base stations, and centralized controllers (e.g., MSCs) that support hand-off and inbound calling. Such systems are thus well-suited for the deployment of the principles of the present invention. In these systems, the MSC maintains a location registration database for all wireless units, and a call log of all active calls taking place in the system. The location registration database is used for routing each inbound call to the base station in whose coverage area the corresponding wireless unit is currently located. The call log is used for uniquely associating each wireless unit with a telephone circuit destination or path through the switch. Under the present invention, the location registration database and the call log may also be used for managing two or more wireless units sharing the same telephone number.

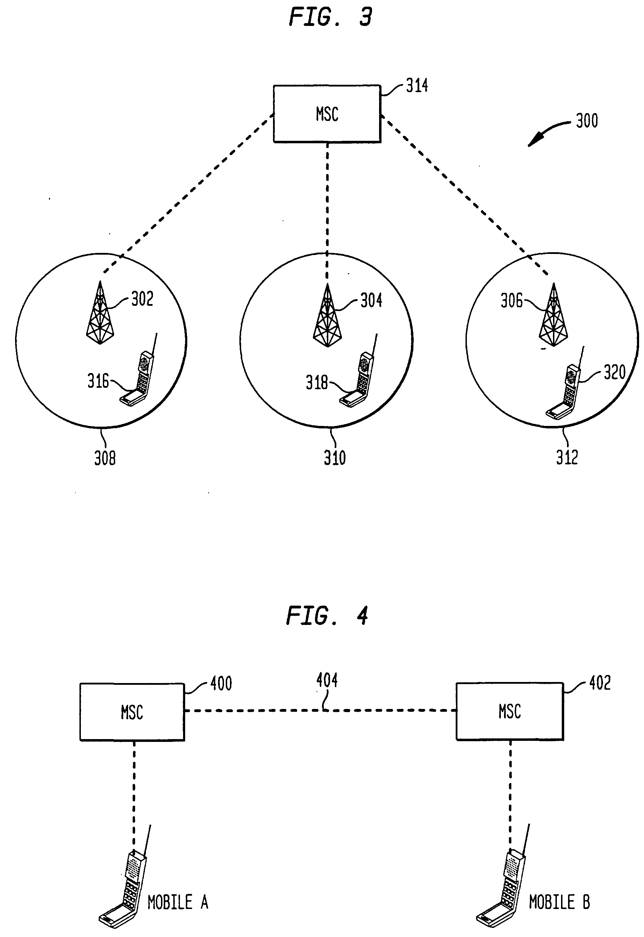

With reference to FIG. 3, a wireless communication system 300 according to one embodiment of the present invention comprises a plurality of base stations 302, 304, 306 that provide wireless coverage in a plurality of coverage areas 308, 310, 312. The base stations are coupled via communication links to an MSC 314. Three wireless units 316, 318, 320 are shown that share the same telephone number. When the MSC receives an incoming call for the telephone number associated with wireless units 316, 318, 320, MSC 314 contacts each of base stations 302, 304, 306 where the wireless units are currently located and then forwards the incoming call to each of the wireless units.

Similar processing is followed when one of the wireless units 316, 318, 320 initiates an outgoing call. When an outgoing call initiated by one of the wireless units arrives at MSC 314, MSC 314 recognizes the outgoing call as requiring special treatment and ensures that, if one or more of the remaining wireless units wish to join the outgoing call, appropriate bridging and multiplexing capabilities are available.

Further enabling the wireless communication system according to the present invention is the existence of a standard protocol for communication between the plurality of wireless units and at least one base station. This standard protocol defines messages and procedures for requesting and establishing wireless communication links, for transmitting and receiving signaling data, for transmitting and receiving user communications, and for defining the format used therefor. An example of such a standard protocol is the DECT standard. The DECT standard is fully defined in the European Telecommunications Standard document ETS 300-175 entitled "Digital European Cordless Telecommunications Common Interface," dated August 1991, and provided by the European Telecommunications Standard Institute. The principles of the present invention may be implemented in a DECT system, because the DECT standard provides a protocol that can support hand-off, inbound calling, various transmissions modes, bridging of calls, and a high traffic density.

The present invention is applicable for different business applications. In business applications, incoming calls may be received at more than one mobile telephone used by sales persons. This application is especially suited for businesses where sales persons often travel away from the office. When an incoming call arrives, the call may be forwarded to the mobile phones of one or more traveling sales persons. Thereon, one of mobiles. The management personnel may use a mobile having the same telephone number as the employees, and may selectively choose to join some of the active calls.

The present invention is also applicable for residential mobile customers. To decrease the cost and increase the utility, the members of a single family may wish to share a single telephone number, similar to land-based residential POTS service.

In the previous discussion, the present invention was described in the context of one or more mobiles sharing a telephone number being served by a single MSC. The present invention is also applicable when one or more mobiles are roaming, e.g., travel outside the coverage area of a single MSC. In the case of roaming, the serving MSC, e.g., the MSC to which the mobiles sharing a telephone number are actually assigned, is responsible for overall bridging and control functions. However, incoming calls to the roaming mobile are first directed to the MSC located closest to the roaming mobile and only then are forwarded to the roaming mobile. Similarly, outgoing calls from the roaming mobile are first to directed to the MSC located closest to the roaming mobile and are then directed to the serving MSC.

FIG. 4 illustrates an exemplary case where one of the mobiles (mobile B) is in a roaming condition. In this case, the serving MSC 400 (i.e., the MSC to which mobiles A and B are assigned) keeps the overall control of bridging and multiplexing functions, but any incoming calls to and any outgoing calls from mobile B are first handled by a second MSC 402 and then are forwarded to the serving MSC 400 via a backhaul link 404. Backhaul links are well known in the art and are currently used in wireless systems to handle communications between different MSCs.

Thus, the wireless communications system according to the present invention is an economical solution where a single telephone number is shared by a plurality of wireless units. The present invention may be implemented within conventional wireless networks and does not substantially increase the dollar cost of the system.

Although the present invention has been described in the context of mobile telephones, it will be understood that the present invention can be applied to other types of wireless units in other types of wireless communication networks.

It will be further understood that various changes in the details, materials, and arrangements of the parts which have been described and illustrated in order to explain the nature of this invention may be made by those skilled in the art without departing from the scope of the invention as expressed in the following claims.

## Claims

1. A method for processing telephone calls in a wireless communications system, comprising the steps of:
(a) assigning a single telephone number to two or more different wireless units;
(b) establishing a call between a first of the wireless units and a third party; and
(c) connecting a second of the wireless units to the call between the first wireless unit and the third party.

2. The invention of claim 1, further comprising the step of notifying the first wireless unit that one of the other wireless units has joined the call.

3. The invention of claim 1, further comprising the step of transmitting a message notifying the remaining wireless units that one of the wireless units is participating in the call.

4. The invention of claim 1, wherein the call is maintained between the third party and the second wireless unit after the first wireless unit has hung up.

5. The invention of claim 1, wherein the first wireless unit and the second wireless unit are located within coverage regions of different mobile switching centers (MSCs) of the wireless communications system, wherein bridging of the second wireless unit into the call is controlled by one of the MSCs.

6. The invention of claim 1, wherein step (b) comprises the step of establishing an incoming call from the third party to the first wireless unit.

7. The invention of claim 1, wherein step (b) comprises the step of establishing an outgoing call from the first wireless unit to the third party.

8. The invention of claim 1, wherein step (a) further comprises the step of keeping track of current locations of the wireless units.

9. The invention of claim 8, wherein, when the call is an incoming call from the third party, step (b) further comprises the step of forwarding the incoming call to each wireless unit based on its current location, wherein the first wireless unit answers the incoming call.

10. The invention of claim 9, step (b) further comprising the step of transmitting a message notifying the remaining wireless units that one of the wireless units is participating in the call based on the current locations of the remaining wireless units.

11. The invention of claim 10, wherein step (c) comprises the step of notifying the first wireless unit that the second wireless unit has joined the call.

12. The invention of claim 8, wherein the wireless units are located within coverage regions of two or more different mobile switching centers of the wireless communications system.

13. A wireless communications system, comprising one or more mobile switching centers (MSCs) controlling one or more base stations configured to communicate with one or more wireless units, wherein:
a single telephone number is assigned to two or more different wireless units;
an MSC establishes a call between a first of the wireless units and a third party via the one or more base stations; and
the one or more MSCs connect a second of the wireless units to the call between the first wireless unit and the third party.

14. The invention of claim 13, the one or more MSCs notify the first wireless unit that one of the other wireless units has joined the call.

15. The invention of claim 13, the one or more MSCs transmit a message notifying the remaining wireless units that one of the wireless units is participating in the call.

16. The invention of claim 13, wherein the call is maintained between the third party and the second wireless unit after the first wireless unit has hung up.

17. The invention of claim 13, wherein the first wireless unit and the second wireless unit are located within coverage regions of different MSCs of the wireless communications system, wherein bridging of the second wireless unit into the call is controlled by one of the MSCs.

18. The invention of claim 13, wherein the call is an incoming call from the third party to the first wireless unit.

19. The invention of claim 13, wherein the call is an outgoing call from the first wireless unit to the third party.

20. The invention of claim 13, wherein the one or more MSCs keep track of current locations of the wireless units.

21. The invention of claim 20, wherein, when the call is an incoming call from the third party, the one or more MSCs forward the incoming call to each wireless unit based on its current location, wherein the first wireless unit answers the incoming call.

22. The invention of claim 21, the one or more MSCs transmit a message notifying the remaining wireless units that one of the wireless units is participating in the call based on the current locations of the remaining wireless units.

23. The invention of claim 22, wherein the one or more MSCs notify the first wireless unit that the second wireless unit has joined the call.

24. The invention of claim 20, wherein the wireless units are located within coverage regions of two or more different MSCs.
